# EUROPEAN PATENT APPLICATION

(11) **EP 4 834 655 A1**
(43) Date of publication of application: **04.11.2026**
(21) Application number: 25305627.9
(22) Date of filing: 30.04.2025
(51) Int. Cl.: B60N 2/24, B60N 2/30, B60N 2/90, B61D 33/00

(54) **SEAT ARRANGEMENT**

(71) Applicant: ALSTOM Holdings, 93400 Saint-Ouen-sur-Seine (FR)
(72) Inventor: HENNEQUIN, Valentin, 59410 Anzin (FR); MARGAS, Slawomir, 59300 Valenciennes (FR)
(74) Representative: Plasseraud IP

(57) **Abstract**

A tip-up seat arrangement (10) for a passenger vehicle comprising: a fixed frame (12, 13) comprising a reference surface (12.1) with a lower edge (12.2); a seat cushion (16) comprising an upper surface (16.1), a lower surface (16.2), and a distal edge (16.3); and a backrest (14) comprising an outer surface (14.1), wherein when the seat cushion (16) is in a lower position, the backrest (14) is flush with the reference surface (12.1); and when the seat cushion (16) is in an upper position, it forms an ischiatic support for a passenger, and the backrest (14) is retracted away.

## Description

### Technical field

The present disclosure relates to the field of foldable or tip-up seats. In a non-limiting example, the seat arrangement is aimed at a passenger vehicle, preferably a railway vehicle.

### Background art

Tip-up seats are often used in passenger vehicles to improve the passengers' comfort: during rush hours, the tip-up seats are positioned in their upper position to increase the capacity of the vehicle and offer the maximal amount of space to standing passengers, and during off-peak hours passengers can enjoy the comfort of being seated.

Document FR 3 129 635 A1 provides an example of such a seat.

Such a seat relies on the cooperation of the passengers and it has unfortunately been observed that passengers sometimes remain seated on tip-up seats even during rush hours, prioritizing their own comfort over the overall comfort of the entirety of the passengers.

There is therefore a need for tip-up seats which ensures the overall comfort of the passengers.

### Summary of the invention

To provide a response to that need, the present disclosure proposes a tip-up seat arrangement for a passenger vehicle comprising: a fixed frame comprising a reference surface with a lower edge; a movable assembly comprising: a seat cushion comprising an upper surface and a lower surface, and a distal edge joining the upper surface to the lower surface; and a backrest comprising an outer surface, wherein the movable assembly is configured to be movable between an expanded position wherein the seat cushion is in a lower position enabling a passenger to sit on the upper surface, and wherein the backrest is in a flush position where the outer surface of the backrest is flush with the reference surface; and a retracted position wherein the seat cushion is in an upper position, the lower surface forming an ischiatic support for a passenger, the distal edge facing the lower edge, and the outer surface of the backrest being retracted away from the flush position.

The flush position of the backrest improves the comfort of seated passengers as the tip-up seat is in the expanded position, and the ischiatic support, permitted by the retractation of the backrest, improves the comfort of standing passengers, discouraging passengers to remain seated during peak hours. The movement of the backrest enables the seat cushion to clear more space when being retracted.

**In** some examples, the seat cushion is configured to rotate with respect to the fixed frame and the backrest is configured to rotate with respect to the seat cushion. This rotational connection between the backrest and the seat cushion facilitates the movement of the backrest as the seat cushion is being (manually or automatically) operated. The backrest may be a passive element of the movable assembly.

**In** some examples, the backrest comprises a pin engaging a slot of the fixed frame. This arrangement enables to properly control the movement of the backrest into or out of the retracted position. Preferably, the pin is remote from the pivoting axis of the backrest with respect to the seat cushion of at least half of the height of the backrest.

In some examples, in the retracted position, a gap separates the distal edge from the lower edge, the gap being smaller than a human's finger. Such a small gap prevents any passenger from attempting to open the seat as it is locked in the retracted position. A small gap also provides safety as a passenger may not squeeze their finger in the gap.

In some examples, in the retracted position the upper surface of the seat cushion is flush with the reference surface. As the backrest is retracted away from the position where it is flush with the reference surface, the seat cushion comes to take the place of the backrest. The seat cushion may contact the backrest at least partially, and may be stabilized in position through that contact. Variant examples make use of a stopper or bumper or abutment, which the seat cushion abuts in the retracted position.

In some examples, the distal edge is curved and forms a radius of at least 1 cm. This radius improves the comfort of seated passenger as they do not feel a sharp edge below their legs. Such a radius is also making it more difficult for a passenger to grasp the edge and attempt to force the movement of the seat when it is in the retracted position.

In some examples, the seat arrangement further comprises a locking mechanism comprising a lock configured to engage a first recess of the movable assembly as the movable assembly is in the expanded position and to engage a second recess of the movable assembly as the movable assembly is in the retracted position. Providing a mechanical locking mechanism ensures that a passenger may not force the seat open (or close). This makes it possible for the staff (e.g., driver) to control the opening or closing of the tip-up seats.

In some examples, the first and second recesses are portions of a cylinder and the lock is a portion of a cylinder such that as the lock rotates it may engage or disengage the first or second recess. This design is reliable and compact, clearing some space rendered available for passengers and making sure that the seats remain retracted when needed.

In some examples, the seat arrangement further comprises a stabilizer rendering the retracted and expanded positions as mechanically stable positions of the movable assembly. The stabilizer may be a gas spring. It may assist an operator closing or opening the seats, as the operator is no longer required to hold the seat in position as they are engaging the lock.

In some examples, the lower surface comprises a substantially planar portion and a curved portion, and as the seat cushion is in the upper position the substantially planar portion is substantially vertical and the curved portion forms the ischiatic support. This optimizes the space available for standing passengers, as well as offering some comfort to the passengers desiring to rest their ischiatic anatomy onto the open seat-cushion.

In some examples, the fixed frame is a wall or a window frame of the passenger vehicle. The present seat arrangement may then be adapted to existing passenger vehicles.

The present disclosure further relates to a method for operating a tip-up seat arrangement, the method comprising: providing a tip-up seat arrangement according to any of the above-mentioned examples; moving the movable assembly between an expanded position wherein the seat cushion is in a lower position enabling a passenger to sit on the upper surface, and wherein the backrest is in a flush position where the outer surface of the backrest is flush with the reference surface; and a retracted position wherein the seat cushion is in an upper position, the lower surface forming an ischiatic support for a passenger, the distal edge facing the lower edge, and the outer surface of the backrest being retracted away from the flush position, or vice versa.

In some examples, during step moving, the seat cushion rotates with respect to the fixed frame and the backrest rotates with respect to the seat cushion. The backrest rotates in a rotational direction opposite the rotational direction of the seat cushion.

In some examples, the movement of the movable assembly is fully automated, for example through electric motors.

In some examples the tip-up seat arrangement comprises a locking mechanism, the method comprising: automatically or manually unlocking the locking mechanism; manually moving the movable assembly from the expanded position to the retracted position, or vice versa; and automatically locking the locking mechanism upon detection of the movable assembly reaching the retracted position, or respectively the expanded position. This arrangement enables a single operator to first unlock the seats, then walk through the vehicle to manually change their position and the seats are automatically locked as soon as the new position is detected.

In some examples, the tip-up seat arrangement comprises a locking mechanism comprising a lock configured to engage a first recess of the movable assembly as the movable assembly is in the expanded position and to engage a second recess of the movable assembly as the movable assembly is in the retracted position, wherein the first and second recesses are portions of a cylinder and the lock is a portion of a cylinder such that as the lock rotates it may engage or disengage the first or second recess, the method comprising: rotating the lock in a first rotational direction as the movable assembly is in the expanded position; and rotating the lock in a second rotational direction opposite the first rotational direction as the movable assembly is in the retracted position. These opposite directions allow to ensure a point of contact between the lock and the recess that makes sure that there is no play: the seat cushion and the backrest are locked in position without play, and without possible vibrations, whether in the retracted or expanded position.

The present disclosure may also relate to the following subject-matter, independently or in combination with any of the above examples:
A tip-up seat arrangement for a passenger vehicle comprising: a fixed frame; and a movable assembly comprising: a seat cushion; and a backrest, wherein the seat cushion is configured to rotate with respect to the fixed frame and the backrest is configured to rotate with respect to the seat cushion, and optionally the backrest comprises a pin engaging a slot of the fixed frame.
A tip-up seat arrangement for a passenger vehicle comprising: a fixed frame; a movable assembly comprising: a seat cushion; and a backrest, wherein the movable assembly is configured to be movable between an expanded position and a retracted position, wherein the seat arrangement further comprises a locking mechanism comprising a lock configured to engage a first recess of the movable assembly as the movable assembly is in the expanded position and to engage a second recess of the movable assembly as the movable assembly is in the retracted position. Optionally, the first and second recesses are portions of a cylinder and the lock is a portion of a cylinder such that as the lock rotates it may engage or disengage the first or second recess.

### Brief description of the figures

Other features, details and advantages will be shown in the following detailed description and on the figures, on which:
FIG.1 shows a known tip-up seat.
FIG.2 depicts a seat arrangement in an expanded position.
FIG.3 illustrates a seat arrangement in a retracted position.
FIG.4 shows the kinematic of a seat arrangement.
FIG.5A-5D detail the locking process of a seat arrangement.
FIG.6 shows a diagram of a method.
FIG.7 shows a diagram of a method.

### Detailed description of an embodiment

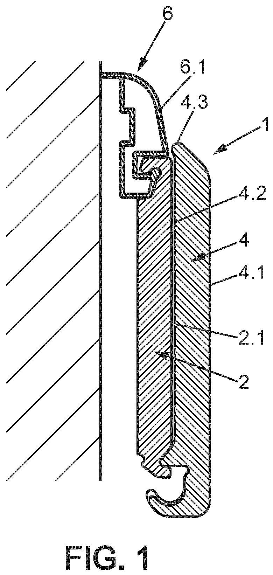

FIG.1 shows a known example of a tip-up seat arrangement 1 in a retracted position. The tip-up arrangement 1 comprises a backrest 2 and a pivotable seat cushion 4.

The backrest comprises an outer surface 2.1, visible to the passengers only when the seat is open. The seat cushion 4 comprises a lower surface 4.1 which is substantially vertical as the seat is in the retracted position. The seat cushion 4 comprises an upper surface 4.2 which forms the seating surface whereon passengers may sit when the seat is open. As illustrated, in the retracted position, the outer surface 2.1 of the backrest 2 contacts the upper surface 4.2 of the seat cushion 4. The seat cushion 4 further comprises a distal edge 4.3 bridging the upper surface 4.2 to the lower surface 4.1.

A fixed frame 6 comprises a reference surface 6.1.

To open the seat 1, the passenger grasps the seat cushion 4 at the distal edge 4.3 and pivots the seat cushion 4 downwards until the seat cushion abuts a stopper which may be part of the backrest.

As can be seen on FIG.1, even in the retracted position, the seat 1 is cumbersome and does not leave much space for the standing passengers. Also, this seat may be operated by passengers who want to be seated even during rush hours, thereby reducing the comfort of all the other passengers.

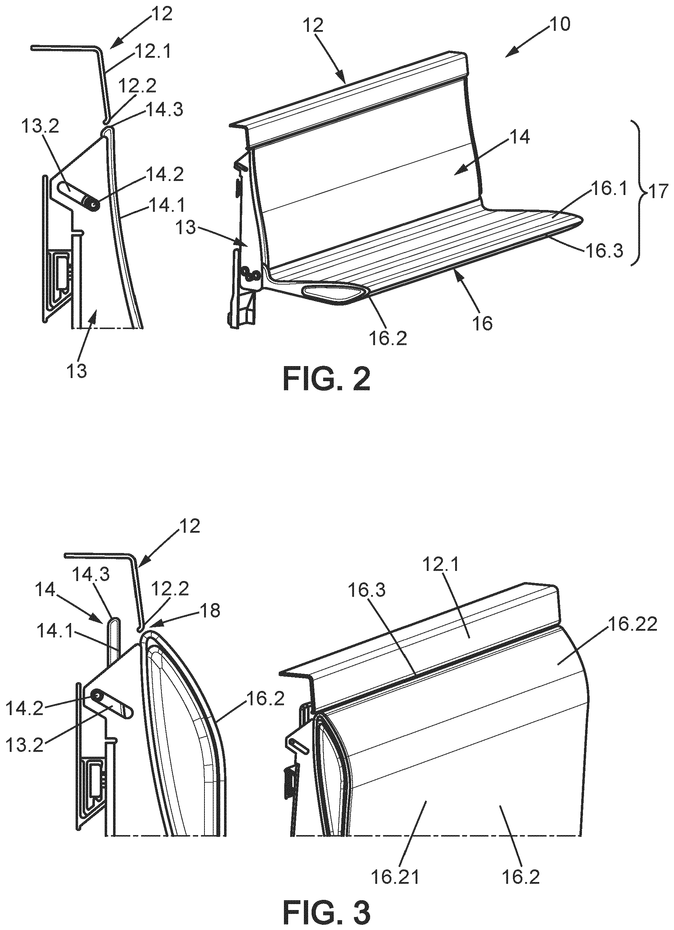

FIG.2 shows a tip-up seat arrangement 10 according to the present disclosure, in an expanded position (aka open seat, down folded, or expanded configuration). The left-hand side of FIG.2 shows a side view and the right-hand side shows an isometric view.

The seat arrangement 10 comprises a fixed frame which is here represented by two distinct pieces 12, 13. The fixed frame may comprise a wall partition or a window frame of a passenger vehicle. Additional seat supporting or structural frame elements that are fixed relative to the wall partition or window frame are considered as part of the fixed frame 12, 13 in the present disclosure. The fixed frame 12, 13 comprises a reference surface 12.1 which is visible to a user. The reference surface 12.1 terminates at a lower edge 12.2.

The seat arrangement 10 further comprises a backrest 14 and a seat cushion 16 (aka seat base, seat panel, seat pan). In the expanded position, the seat cushion 16 is in a lower position and a user can sit on the seat cushion 16 while their back rests on the backrest 14.

The backrest 14 comprises an outer surface 14.1, visible to a user, and an inner surface (not labeled) on a side opposite the outer surface 14.1 and invisible to the user.

The outer surface 14.1 ends with an upper edge 14.3. In the expanded position shown on FIG.1, the upper edge 14.3 faces the lower edge 12.2 of the fixed frame 12, 13. A gap between the lower edge 12.2 and the upper edge 14.3 is smaller than a human's finger, for obvious safety reasons.

The backrest 14 is in a flush position where its outer surface 14.1 is flush with the reference surface 12.1. "Flush" is here intended to mean that there is no substantial horizontal offset between the lower edge 12.2 and the upper edge 14.3. Also, the outer surface 14.1 has a tangent direction in proximity to the upper edge 14.3 that is substantially aligned with a tangent of the reference surface 12.1 in proximity to the lower edge 12.2. This prevents any discomfort in the back of a user being seated.

The seat cushion 16 comprises an upper surface 16.1 which may be substantially horizontal in the expanded position and on which a user may sit. The seat cushion 16 further comprises a lower surface 16.2 which faces the ground, and a distal edge 16.3 connecting the upper surface 16.1 to the lower surface 16.2. The distal edge 16.3 may be rounded with a radius of at least 1 cm, preferably at least 2 cm.

The backrest 14 and the seat cushion 16 are movable and constitute a movable assembly 17.

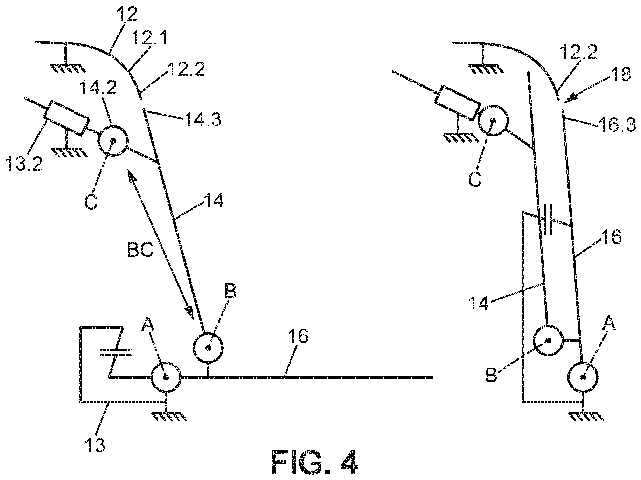

The fixed frame 12, 13 also comprises a bracket 13 (or a pair thereof, at both ends of the movable assembly 17) serving as a structural supporting frame for the seat arrangement. The bracket 13 comprises a slot 13.2 which may have a linear profile. The backrest 14 comprises a pin 14.2 engaging the slot 13.2. The pin 14.2 may slide and rotate in the slot 13.2 around a horizontal axis (C on FIG.4).

The bracket 13 is intended to be fixed to a sidewall of a passenger vehicle in such a way that a fixation of the seat arrangement to the floor of the passenger vehicle is no longer necessary.

FIG.3 shows the tip-up seat arrangement 10 with the movable assembly 17 in a retracted position (aka retracted configuration, closed seat, or vertical configuration). The left-hand side of FIG.3 shows a side view and the right-hand side shows an isometric view.

In that position, the backrest 14 is retracted away from the flush position. The pin 14.2 may be in abutment with an end of the slot 13.2. The outer surface 14.1 is no longer aligned with the reference surface 12.1. The upper edge 14.3 is distant from the lower edge 12.2 horizontally, of at least 0.5 cm, preferably at least 1 cm.

In the retracted position, the seat cushion 16 is in an upper position, i.e., substantially vertical. The lower surface 16.2 can form an ischiatic support, potentially in conjunction with the reference surface 12.1. The distal edge 16.3 faces the lower edge 12.2. A gap 18 between the distal edge 16.3 and the lower edge 12.2 may be smaller than a human's finger. For example, the gap 18 may be less than 0.8 cm, preferably less than 0.5 cm.

In that position, the upper surface 16.1 of the seat cushion 16 may be flush with the reference surface 12.1, i.e., the backrest 14 has moved away and cleared the space for the seat cushion 16 to retract close to the fixed frame 12, and offers a comfortable ischiatic support.

FIG.3 also shows that the lower surface 16.2 can be made of a substantially planar portion 16.21 and a curved portion 16.22. The planar portion 16.21 may be substantially vertical to clear as much room as possible for standing passengers. The curved portion 16.22 may be adapted for an ischiatic support of passengers of various heights.

FIG.4 shows the kinematic scheme of the tip-up seat arrangement 10.

The left-hand side shows the tip-up seat arrangement 10 with the movable assembly in an expanded position whereas the right-hand side shows the tip-up seat arrangement 10 with the movable assembly in a retracted position.

The seat cushion 16 is pivotable around axis A with respect to the fixed frame 12, 13. The backrest 14 is pivotable around axis B with respect to the seat cushion 16. The pin 14.2 may freely rotate around axis C and slide in the slot 13.2.

The axes A, B and C are parallel to one another and are horizontal.

Around axis A, the seat cushion 16 may rotate of an angle comprised between 70° and 120° between the lower position and the upper position.

Around axis B, the backrest 14 may rotate of an angle comprised between 5° and 20° between the flush position and the offset position.

The distance between the link with pin 14.2 and the link between the backrest 14 and the seat cushion 16, i.e., distance BC, may be appropriately chosen for obtaining a desired movement of the backrest 14. The distance BC may be at least 50% of the height of the backrest 14 (the difference between the highest and lowest point of the backrest in the expanded position), preferably at least 90%.

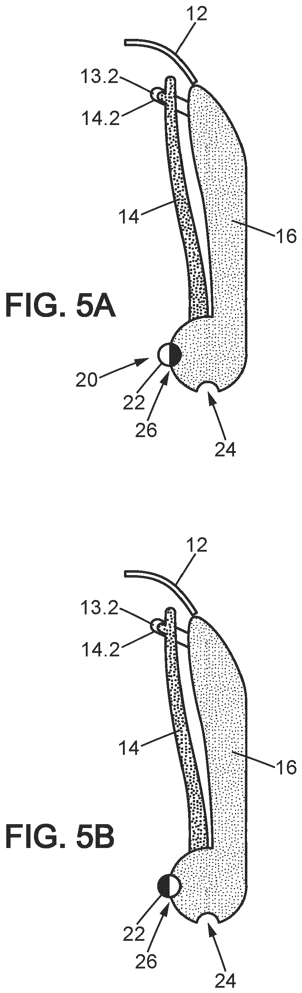

FIGS.5A to 5D show the tip-up seat arrangement 10 and especially a locking mechanism 20 in a step-by-step movement from the retracted position to the expanded position.

The locking mechanism 20 is provided to prevent any inadvertent or unauthorized movement of the movable assembly. The locking mechanism 20 comprises a lock 22 which may be in the form of a portion of cylinder, for example half a cylinder. The lock 22 is driven in rotation by an actuator (not shown). The lock 22 may rotate in both rotational directions (clockwise or counterclockwise).

The movable assembly (i.e., the seat cushion 16 or the backrest 14) comprises a first recess 24 and a second recess 26, having a shape that is at least partially complementary with the shape of the lock 22. The first and second recesses 24, 26 may be a portion of a cylinder.

On FIG.5A, the movable assembly is locked in the retracted position. The lock 22 is engaged in the recess 26.

On FIG.5B, the lock 22 is no longer engaged in the recess 26. It has rotated of about 180° in a counterclockwise or a clockwise direction.

The movable assembly is therefore free to move, e.g., under the application of a manual force.

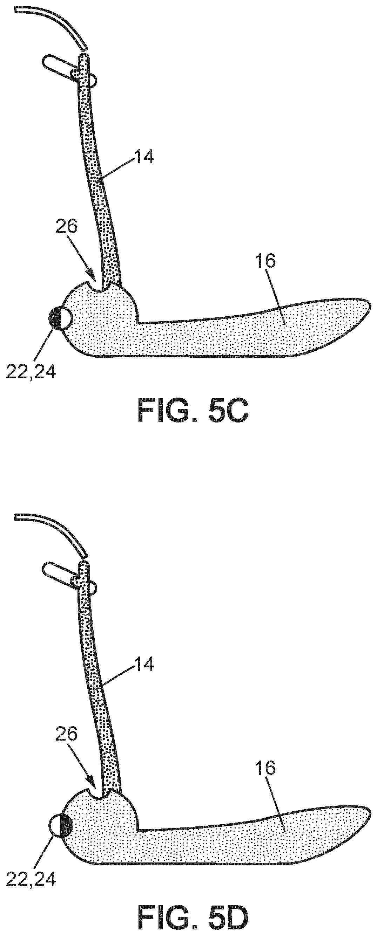

FIG.5C shows the seat arrangement in the expanded position, while the lock 22 is not yet engaged in the recess 24.

FIG.5D shows that after having rotated in a counterclockwise or a clockwise direction of about 180°, the lock 22 is received in the recess 24, thereby preventing any motion of the seat cushion 16, even if an operator attempts to move the seat cushion 16 upwards.

The positions of FIG.5B and FIG.5C may be mechanically stable positions (balanced), in the sense that in the absence of any force applied by an operator, the seat remains in the retracted or expanded position, irrespective of the seat being locked or not.

The stabilization of these positions may be obtained by incorporation of a stabilizer (not shown), e.g., gas spring, in the seat assembly.

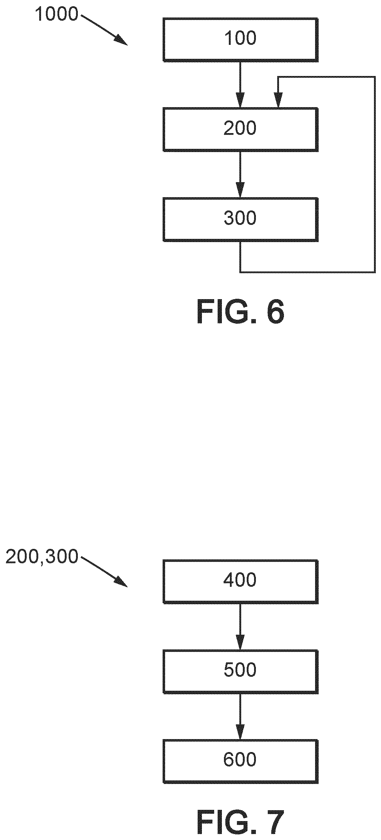

FIG.6 illustrates a method 1000 for operating a tip-up seat arrangement.

The method comprises providing 100 a tip-up seat arrangement 10 according to any of the examples given above.

The method further comprises moving 200 the movable assembly of the seat arrangement 10. If the movable assembly lies in the expanded position, the step moving 200 starts with the movable assembly in the expanded position and finishes with the movable assembly in the retracted position.

If the movable assembly lies in the retracted position, the step moving 200 starts with the movable assembly in the retracted position and finishes with the movable assembly in the expanded position.

The movement may follow the kinematic described above and in particular in connection with FIG.4. Hence, during step moving 200, the seat cushion 16 rotates around axis A with respect to the fixed frame 12, 13 and the backrest 14 rotates around axis B with respect to the seat cushion 16. The pin 14.2 slides in the slot 13.2 and may rotate around axis C.

At a desired moment, the method continues by moving 300 the movable assembly back into the previous position.

The method continues, each moving step 200, 300 constituting an alternate movement between the two positions.

FIG.7 shows that the moving step 200, 300 may comprise three sub-steps 400, 500, 600.

First, the locking mechanism 20 is unlocked 400, automatically or manually. Then, the seat arrangement is moved 500 manually from a stable position (retracted or expanded) to another stable position (expanded or retracted). Then, the locking mechanism is locked 600. This may happen automatically straight away as the new position (expanded or retracted) is detected.

Locking and unlocking may happen by rotating the lock 22 represented on FIG.5. The rotation of the lock 22 may be in opposite rotational directions when engaging the first lock or the second lock.

Namely, as the seat cushion is in the lower position, the lock 22 may engage the recess 24 by rotating counterclockwise. The friction with the recess 24 will make the seat cushion 16 rotate clockwise (the distal edge 16.3 moving towards the floor). As the seat cushion is in the upper position, the lock may rotate clockwise as it engages the recess 26. This encourages a counterclockwise movement of the seat cushion, forcing it against an abutment in the upper position. In both cases, the specific choice of rotation direction prevents any play or vibration from occurring once the seat is locked.

Alternatively, the movement of the movable assembly may be fully automated.

## Claims

1. A tip-up seat arrangement (10) for a passenger vehicle comprising:
a fixed frame (12, 13) comprising a reference surface (12.1) with a lower edge (12.2); and
a movable assembly (17) comprising:
a seat cushion (16) comprising an upper surface (16.1), a lower surface (16.2), and a distal edge (16.3) joining the upper surface (16.1) to the lower surface (16.2); and
a backrest (14) comprising an outer surface (14.1),
wherein the movable assembly (17) is configured to be movable between
an expanded position wherein the seat cushion (16) is in a lower position enabling a passenger to sit on the upper surface (16.1), and wherein the backrest (14) is in a flush position where the outer surface (14.1) of the backrest (14) is flush with the reference surface (12.1); and
a retracted position wherein the seat cushion (16) is in an upper position, the lower surface (16.2) forming an ischiatic support for a passenger, the distal edge (16.3) facing the lower edge (12.2), and the outer surface (14.1) of the backrest (14) being retracted away from the flush position.

2. The tip-up seat arrangement (10) of claim 1, wherein the seat cushion (16) is configured to rotate with respect to the fixed frame (12, 13) and the backrest (14) is configured to rotate with respect to the seat cushion (16).

3. The tip-up seat arrangement (10) of claim 1 or 2, wherein the backrest (14) comprises a pin (14.2) engaging a slot (13.2) of the fixed frame (12, 13).

4. The tip-up seat arrangement (10) of any of the preceding claims, wherein in the retracted position, a gap (18) separates the distal edge (16.3) from the lower edge (12.2), the gap (18) being smaller than a human's finger.

5. The tip-up seat arrangement (10) of any of the preceding claims, wherein in the retracted position the upper surface (16.1) of the seat cushion (16) is flush with the reference surface (12.1).

6. The tip-up seat arrangement (10) of any of the preceding claims, wherein the distal edge (16.3) is curved and forms a radius of at least 1 cm.

7. The tip-up seat arrangement (10) of any of the preceding claims, further comprising a locking mechanism (20) comprising a lock (22) configured to engage a first recess (24) of the movable assembly (17) as the movable assembly (17) is in the expanded position and to engage a second recess (26) of the movable assembly (17) as the movable assembly (17) is in the retracted position.

8. The tip-up seat arrangement (10) of the preceding claim, wherein the first and second recesses (24,26) are portions of a cylinder and the lock (22) is a portion of a cylinder such that as the lock (22) rotates it may engage or disengage the first or second recess (24, 26).

9. The tip-up seat arrangement (10) of any of the preceding claims, further comprising a stabilizer rendering the retracted and expanded positions as mechanically stable positions of the movable assembly.

10. The tip-up seat arrangement (10) of any of the preceding claims, wherein the lower surface (16.2) comprises a substantially planar portion (16.21) and a curved portion (16.22), and as the seat cushion (16) is in the upper position the substantially planar portion (16.21) is substantially vertical and the curved portion (16.22) forms the ischiatic support.

11. The tip-up seat arrangement (10) of any of the preceding claims, wherein the fixed frame (12, 13) is a wall or a window frame of the passenger vehicle.

12. Method (1000) for operating a tip-up seat arrangement (10), the method comprising:
providing (100) a tip-up seat arrangement (10) according to any of the previous claims;
moving (200) the movable assembly between
an expanded position wherein the seat cushion (16) is in a lower position enabling a passenger to sit on the upper surface (16.1), and wherein the backrest (14) is in a flush position where the outer surface (14.1) of the backrest (14) is flush with the reference surface (12.1); and
a retracted position wherein the seat cushion (16) is in an upper position, the lower surface (16.2) forming an ischiatic support for a passenger, the distal edge (16.3) facing the lower edge (12.2), and the outer surface (14.1) of the backrest (14) being retracted away from the flush position,
or vice versa (300).

13. The method of claim 12, wherein during step moving (200), the seat cushion (16) rotates with respect to the fixed frame (12, 13) and the backrest (14) rotates with respect to the seat cushion (16).

14. The method of claim 12 or 13, wherein the tip-up seat arrangement (10) comprises a locking mechanism (20), the method (1000) comprising:
automatically or manually unlocking (400) the locking mechanism (20);
manually moving (500) the movable assembly (17) from the expanded position to the retracted position, or vice versa;
and automatically locking (600) the locking mechanism upon detection of the movable assembly (17) reaching the retracted position, or respectively the expanded position.

15. The method of any of claims 12-14, wherein the tip-up seat arrangement (10) comprises a locking mechanism (20) comprising a lock (22) configured to engage a first recess (24) of the movable assembly (17) as the movable assembly (17) is in the expanded position and to engage a second recess (26) of the movable assembly (17) as the movable assembly (17) is in the retracted position, wherein the first and second recesses (24, 26) are portions of a cylinder and the lock (22) is a portion of a cylinder such that as the lock (22) rotates it may engage or disengage the first or second recess (24, 26), the method comprising locking (600) the locking mechanism by:
rotating the lock in a first rotational direction as the movable assembly is in the expanded position; and
rotating the lock in a second rotational direction opposite the first rotational direction as the movable assembly is in the retracted position.
